# EUROPEAN PATENT APPLICATION

(11) **EP 4 629 582 A1**
(43) Date of publication of application: **08.10.2025**
(21) Application number: 23910344.3
(22) Date of filing: 21.12.2023
(51) Int. Cl.: H04L 41/044

(54) **COMMUNICATION METHOD AND COMMUNICATION APPARATUS**

(30) Priority: 29.12.2022 CN 202211725406
(71) Applicant: Huawei Technologies Co., Ltd., Shenzhen, Guangdong 518129 (CN)
(72) Inventor: XIA, Haitao, Shenzhen, Guangdong 518129 (CN)
(74) Representative: Isarpatent
(86) International application number: PCT/CN2023/140689
(87) International publication number: WO 2024/140418

(57) **Abstract**

Embodiments of this application provide a communication method and a communication apparatus. The communication method includes: accessing a data model, to obtain a target state of a managed object in an NFV MANO management domain in the data model; and invoking a first function from a function set based on the target state, where the first function is used for transition from an existing state of the managed object to the target state. Therefore, the data model and the function set are integrated in the NFV MANO management domain, so that data and a function operation of the managed object in the NFV MANO management domain are separated, to implement a simplified, agile, and scalable intent-driven management architecture.

## Description

This application claims priority to Chinese Patent Application No. 202211725406.7, filed with the China National Intellectual Property Administration on December 29, 2022, and entitled "COMMUNICATION METHOD AND COMMUNICATION APPARATUS".

### TECHNICAL FIELD

Embodiments of this application relate to the field of wireless communication technologies, and more specifically, to a communication method and a communication apparatus.

### BACKGROUND

Network functions virtualisation (network functions virtualisation, NFV) implements functions of a dedicated device in a conventional communication network using a general-purpose hardware device and a virtualisation technology, and can implement quick deployment of a new network service (network service, NS) through resource sharing, to reduce network deployment costs and improve network running efficiency.

Currently, the NFV industry specification group of the European Telecommunications Standards Institute defines a layered and decoupled NFV-management and orchestration (management and orchestration, MANO) architecture for telco cloud management, to support virtual machine/container-based deployment and operations, administration, and maintenance of a telecommunications network element for infrastructure functions. The Linux Foundation also proposes Nephio, which is a flat architecture, to implement automatic telco cloud management.

However, for large-scale networking and requirements of telecommunications network operations and maintenance for high performance, high reliability, and high security, an existing NFV MANO architecture has deficiencies of complex architecture, poor scalability, and the like during long-term evolution and development of the telco cloud. The Nephio architecture has disadvantages of insufficient telco cloud-specific attributes, excessive customizations, and the like.

Therefore, in a long-term evolution scenario of the telco cloud in the future, how to improve function interaction simplicity and scalability in a management architecture is an urgent problem to be resolved.

### SUMMARY

An embodiment of this application provides a communication method. A data model and a function set are integrated in an NFV MANO management domain, so that data and a function operation of the managed object in the NFV MANO management domain are separated, to implement a simplified, agile, and scalable intent-driven management architecture.

According to a first aspect, a communication method is provided. The method may be performed by an NFV MANO management domain, or may be performed by a function component (or referred to as a management functional entity) in the NFV MANO management domain. This is not limited herein. For ease of description, the following uses an example in which the method is performed by the NFV MANO management domain for description.

The NFV MANO management domain includes a data model and a function set. The method may include: accessing the data model, to obtain a target state of a managed object in the NFV MANO management domain in the data model; and invoking a first function from the function set based on the target state, where the first function is used for transition from an existing state of the managed object to the target state.

Based on the foregoing solution, the data model and the function set are integrated in the NFV MANO management domain, so that data and a function operation of the managed object in the NFV MANO management domain are separated, to implement a simplified, agile, and scalable intent-driven management architecture.

In a possible implementation, the data model further includes parameter information, and the parameter information supports transition from the existing state of the managed object to the target state.

Based on the foregoing solution, the data model further includes the parameter information that supports transition of the managed object to the target state, to increase diversity of solutions for transition from the existing state to the target state.

In a possible implementation, that the first function is used for transition from the existing state of the managed object to the target state includes: The first function is used for transition from the existing state of the managed object to the target state based on the parameter information.

Based on the foregoing solution, when the first function is invoked, the existing state of the managed object can be transited to the target state based on the parameter information.

In a possible implementation, before the accessing the data model, the method further includes: subscribing to a change of the target state of the managed object.

Based on the foregoing solution, when the NFV MANO management domain learns, through subscribing, that a state of the managed object changes, the NFV MANO management domain further accesses the data model in which information about the managed object is located.

In a possible implementation, the invoking the first function from the function set based on the target state includes: invoking the first function from the function set based on the target state and the existing state of the managed object.

Based on the foregoing solution, the NFV MANO management domain can invoke the first function based on the target state and the existing state of the managed object, to increase diversity of solutions for invoking the first function.

In a possible implementation, after the invoking the first function from the function set based on the target state, the method further includes: updating the existing state of the managed object in the data model to the target state.

Based on the foregoing solution, when detecting that the managed object is transited to the target state, the NFV MANO management domain updates state information of the managed object.

In a possible implementation, the managed object includes any one of the following: a cloud service object, a network service NS, a virtualised network function VNF, a virtualised network function component VNFC, a container cluster, a managed container infrastructure service object, a virtual resource, and a physical resource.

In a possible implementation, the function set includes at least one of the following: life cycle management; fault management, configuration management, account management, performance management, and security management FCAPS; intent management; and operations management.

In a possible implementation, the life cycle management includes at least one of the following management operation functions: an instantiation function, a scaling function, a termination function, and a healing function.

In a possible implementation, the FCAPS includes at least one of the following management operation functions: a configuration management function, a performance management function, a fault management function, an account management function, and a security management function.

In a possible implementation, the intent management includes at least one of the following management operation functions: a design function, a deployment function, and a closed-loop control function.

In a possible implementation, the operations management includes at least one of the following management operation functions: a multi-tenant management function, a charging or metering function, and a service catalog function.

According to a second aspect, a communication apparatus is provided, including a unit configured to perform the method shown in the first aspect. The communication apparatus may be an NFV MANO management domain, or may be a function component disposed in the NFV MANO management domain. This is not limited in this application.

The NFV MANO management domain includes a data model and a function set, and the communication apparatus includes:
a processing unit, configured to access the data model, to obtain a target state of a managed object in the NFV MANO management domain in the data model.

The processing unit is further configured to invoke a first function from the function set based on the target state, where the first function is used for transition from an existing state of the managed object to the target state.

In a possible implementation, the data model further includes parameter information, and the parameter information supports transition from the existing state of the managed object to the target state.

In a possible implementation, the first function is used for transition from the existing state of the managed object to the target state based on the parameter information.

In a possible implementation, before the accessing the data model, the processing unit is further configured to subscribe to a change of the target state of the managed object.

In a possible implementation, the processing unit is further configured to invoke the first function from the function set based on the target state and the existing state of the managed object.

In a possible implementation, after the invoking the first function from the function set based on the target state, the processing unit is further configured to update the existing state of the managed object in the data model to the target state.

In a possible implementation, the managed object includes any one of the following: a cloud service object, a network service NS, a virtualised network function VNF, a virtualised network function component VNFC, a container cluster, a managed container infrastructure service object, a virtual resource, and a physical resource.

In a possible implementation, the function set includes at least one of the following: life cycle management, fault management, configuration management, account management, performance management, and security management FCAPS; intent management; and operations management.

In a possible implementation, the life cycle management includes at least one of the following management operation functions: an instantiation function, a scaling function, a termination function, and a healing function.

In a possible implementation, the FCAPS includes at least one of the following management operation functions: a configuration management function, a performance management function, a fault management function, an account management function, and a security management function.

In a possible implementation, the intent management includes at least one of the following management operation functions: a design function, a deployment function, and a closed-loop control function.

In a possible implementation, the operations management includes at least one of the following management operation functions: a multi-tenant management function, a charging or metering function, and a service catalog function.

For explanations of related content and beneficial effects of the communication apparatus provided in the second aspect, refer to the method according to the first aspect. Details are not described herein again.

According to a third aspect, a communication method is provided. The method may be performed by a cloud management function, or may be performed by a function component (or referred to as a management functional entity) in the cloud management function. This is not limited herein. For ease of description, the following uses an example in which the method is performed by the cloud management function for description.

The NFV MANO management domain includes a cloud service data model and a function set. The method may include: The cloud management function accesses the cloud service data model, to obtain a target state of a cloud service object in the cloud service data model; and the cloud management function invokes a first function from the function set based on the target state, where the first function is used for transition from an existing state of the cloud service object to the target state.

Based on the foregoing solution, the cloud service data model and the function set are integrated in the NFV MANO management domain, so that data and a function operation of the cloud service object are separated, to implement a simplified, agile, and scalable intent-driven management architecture.

In a possible implementation, the cloud service data model further includes parameter information, and the parameter information supports transition from the existing state of the cloud service object to the target state.

Based on the foregoing solution, the data model further includes the parameter information that supports transition of the cloud service object to the target state, to increase diversity of solutions for transition from the existing state to the target state.

In a possible implementation, the parameter information includes description information of an infrastructure as a service resource.

In a possible implementation, that the first function is used for transition from the existing state of the cloud service object to the target state includes: The first function is used for transition from the existing state of the cloud service object to the target state based on the parameter information.

Based on the foregoing solution, when the first function is invoked, the existing state of the cloud service object can be transited to the target state based on the parameter information.

In a possible implementation, before the cloud management function accesses the cloud service data model, the method further includes: A cloud management tenant sets the target state and/or the parameter information of the cloud service object in the cloud service data model.

Based on the foregoing solution, a state of the cloud service object may be changed in a manner in which the cloud management tenant sets the target state and/or the parameter information of the cloud service object in the cloud service data model.

In a possible implementation, before the cloud management function invokes the first function from the function set based on the target state, the method further includes: The cloud management function subscribes to a change of the target state of the cloud service object.

Based on the foregoing solution, when the cloud management tenant sets the target state of the cloud service object in the cloud service data model, the cloud management function learns, through subscribing, that a state of the cloud service object changes, and further, the cloud management function accesses the data model in which information about the cloud service object is located.

In a possible implementation, that the cloud management function invokes the first function from the function set based on the target state includes: The cloud management function invokes the first function from the function set based on the target state and the existing state of the cloud service object.

Based on the foregoing solution, the cloud management function can invoke the first function based on the target state and the existing state of the cloud service object, to increase diversity of solutions for invoking the first function.

In a possible implementation, after the cloud management function invokes the first function from the function set based on the target state, the method further includes: The cloud management function updates the existing state of the cloud service object in the data model to the target state.

Based on the foregoing solution, when detecting that the cloud service object is transited to the target state, the cloud management function updates state information of the cloud service object.

In a possible implementation, the first function includes instantiating the cloud service object.

According to a fourth aspect, a communication apparatus is provided, including a unit configured to perform the method shown in the third aspect. The communication apparatus may be a cloud management function, or may be a function component disposed in the cloud management function. This is not limited in this application.

An NFV MANO management domain includes a cloud service data model and a function set. The communication apparatus may include: a processing unit, configured to access the cloud service data model, to obtain a target state of a cloud service object in the cloud service data model. The processing unit is further configured to invoke a first function from the function set based on the target state, where the first function is used for transition from an existing state of the cloud service object to the target state.

In a possible implementation, the cloud service data model further includes parameter information, and the parameter information supports transition from the existing state of the cloud service object to the target state.

In a possible implementation, the parameter information includes information about an infrastructure as a service resource.

In a possible implementation, that the first function is used for transition from the existing state of the cloud service object to the target state includes: The first function is used for transition from the existing state of the cloud service object to the target state based on the parameter information.

In a possible implementation, the processing unit is further configured to set the target state and/or the parameter information of the cloud service object in the cloud service data model.

In a possible implementation, the processing unit is further configured to subscribe to a change of the target state of the cloud service object.

In a possible implementation, the processing unit is further configured to invoke the first function from the function set based on the target state and the existing state of the cloud service object.

In a possible implementation, the processing unit is further configured to update the existing state of the cloud service object in the data model to the target state.

In a possible implementation, the first function includes instantiating the cloud service object.

For explanations of related content and beneficial effects of the communication apparatus provided in the fourth aspect, refer to the method according to the third aspect. Details are not described herein again.

According to a fifth aspect, a communication method is provided. The method may be performed by a tenant and an NFV MANO management domain, or may be performed by a function component (or referred to as a functional entity) in the tenant and a function component (or referred to as a management functional entity) in the NFV MANO management domain. This is not limited herein. For ease of description, the following uses an example in which the method is performed by the tenant and the NFV MANO management domain for description.

The NFV MANO management domain includes a data model and a function set. The method may include: The tenant sets a target state of a managed object in the NFV MANO management domain in the data model. The NFV MANO management domain accesses the data model to obtain the target state. The NFV MANO management domain invokes a first function from the function set based on the target state, where the first function is used for transition from an existing state of the managed object to the target state.

Based on the foregoing solution, the data model and the function set are integrated in the NFV MANO management domain, an external system (for example, the tenant) sets a state of the managed object in the NFV MANO management domain, and the data model and the function set in the NFV MANO management domain separate data of the managed object from a function operation, to implement a simplified, agile, and scalable intent-driven management architecture.

According to a sixth aspect, a communication apparatus is provided. The apparatus includes: a memory, configured to store a program; and at least one processor, configured to execute a computer program or instructions stored in the memory, to perform the method in any one of the possible implementations of the first aspect, the third aspect, or the fifth aspect.

In an implementation, the apparatus is an NFV MANO management domain.

In another implementation, the apparatus is a chip, a chip system, or a circuit used in the NFV MANO management domain.

According to a seventh aspect, this application provides a processor. The processor is configured to perform the methods provided in the foregoing aspects.

Unless otherwise specified, or if operations such as sending, and obtaining/receiving related to the processor do not contradict an actual function or internal logic of the operations in related descriptions, the operations may be understood as operations such as outputting, receiving, and inputting of the processor, or operations such as sending and receiving performed by a radio frequency circuit and an antenna. This is not limited in this application.

According to an eighth aspect, a computer-readable storage medium is provided. The computer-readable storage medium stores program code to be executed by a device, and the program code includes the method in any one of the possible implementations of the first aspect, the third aspect, or the fifth aspect.

According to a ninth aspect, a computer program product including instructions is provided. When the computer program product runs on a computer, the computer is enabled to perform the method in any one of the possible implementations of the first aspect, the third aspect, or the fifth aspect.

According to a tenth aspect, a chip is provided. The chip includes a processor and a communication interface. The processor reads, through the communication interface, instructions stored in a memory, to perform the method in any one of the possible implementations of the first aspect, the third aspect, or the fifth aspect.

Optionally, in an implementation, the chip further includes the memory. The memory stores a computer program or instructions. The processor is configured to execute the computer program or the instructions stored in the memory. When the computer program or the instructions are executed, the processor is configured to perform the method in any one of the possible implementations of the first aspect, the third aspect, or the fifth aspect.

According to an eleventh aspect, a communication system is provided, including one or more of an NFV MANO management domain and a cloud management function.

### BRIEF DESCRIPTION OF DRAWINGS

FIG. 1 is a diagram of an architecture of an NFV system applicable to an embodiment of this application;
FIG. 2 shows an intent-driven management architecture according to this application;
FIG. 3 is a diagram of an architecture of a function set applicable to an embodiment of this application;
FIG. 4 is a diagram of an architecture of a data model applicable to an embodiment of this application;
FIG. 5 is a schematic flowchart of a communication method 500 according to an embodiment of this application;
FIG. 6 is a schematic flowchart of a communication method 600 according to an embodiment of this application;
FIG. 7 is a schematic flowchart of a communication method 700 according to an embodiment of this application;
FIG. 8 is a block diagram of a communication apparatus 800 according to an embodiment of this application;
FIG. 9 is a block diagram of another communication apparatus 900 according to an embodiment of this application; and
FIG. 10 is a diagram of a chip system 1000 according to an embodiment of this application.

### DESCRIPTION OF EMBODIMENTS

The following describes technical solutions of embodiments in this application with reference to accompanying drawings.

First, a diagram of an architecture of an NFV system applicable to embodiments of this application is briefly described.

Network functions virtualisation (network functions virtualisation, NFV) means that a telecommunications network operator uses a virtualisation technology in the information technology (information technology, IT) field to perform software and hardware decoupling for implementations of some telecommunications network functions (such as core network functions) in a general-purpose server, a switch, and a storage device. This implements fast and efficient deployment and operations of a network service (network service, NS) and reduces network capital expenditure (capital expenditure, CAPEX) and operating expense (operating expense, OPEX). By applying the NFV technology, the telecommunications network functions are implemented in a software manner, may run on general-purpose server hardware, and may be migrated, instantiated, and deployed at different physical locations of a network as required, without a need to install a new device.

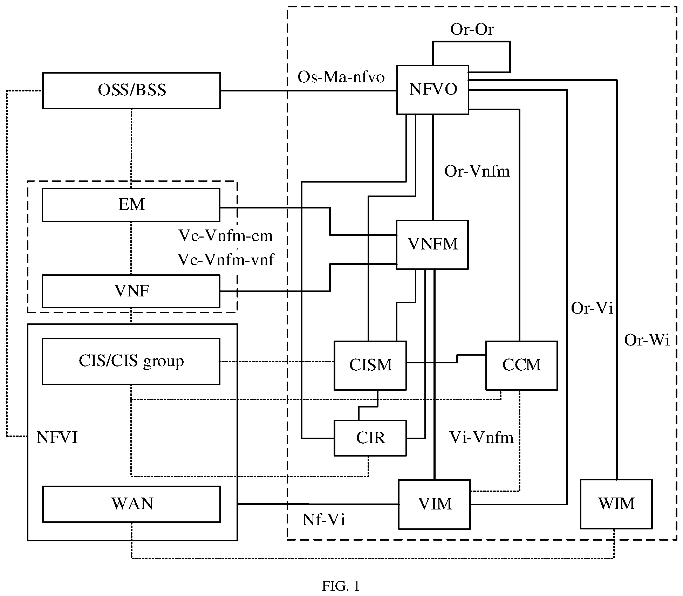

NFV standardization mainly focuses on a network service, a virtualised network function (virtualised network function, VNF), and dynamic management and orchestration (management and orchestration, MANO) of a virtual resource. The interface and architecture (interface and architecture, IFA) workgroup of the NFV industry specification group of the European Telecommunications Standards Institute (European Telecommunications Standards Institute, ETSI) completes function formulation in a MANO framework. FIG. 1 shows a functional architecture. The following describes function components in FIG. 1.
(1) NFV orchestrator (NFV orchestrator, NFVO): The NFVO implements a network service descriptor (NS descriptor, NSD), management and processing of a virtualised network function forwarding graph (VNF forwarding graph, VNFFG), and management of a network service life cycle, cooperates with a VNFM to perform life cycle management of a VNF, and provides a global view function of virtual resources.
(2) VNF manager (VNF manager, VNFM): The VNFM performs life cycle management of a virtualised network function VNF, including management of the virtualised network function descriptor (VNF descriptor, VNFD), instantiation of the VNF, scaling of a VNF instance (including scaling out/up and scaling in/down), healing (healing) of the VNF instance, and termination of the VNF instance. The VNFM further supports receiving of an auto scaling (scaling) policy delivered by the NFVO, to implement VNF auto scaling.
(3) Virtualised infrastructure manager (virtualised infrastructure manager, VIM): The VIM is mainly responsible for management (including reservation and allocation) of virtualised resources (including virtual computing, storage, and network resources) at an infrastructure layer, state monitoring and fault reporting of virtual resources, and providing a virtualised resource pool for an upper-layer application.
(4) Operations and business support systems (operations and business support systems, OSS/BSS): existing operations and maintenance systems OSS/BSS of an operator.
(5) Element management system (element manager, EM): performs conventional fault management, configuration management, user management, performance management, and security management (fault management, configuration management, account management, performance management, security management, FCAPS) functions for a VNF.
(6) Virtualised network function (virtualised network function, VNF): corresponds to a physical network function (physical network function, PNF) in a conventional non-virtualised network, for example, a virtualised EPC node (an MME, an S-GW, a P-GW, and the like). Functionality behavior and a state of a network function are unrelated to whether the network function is virtualised. NFV technical requirements expect that the VNF has same functionality behavior and external interfaces as the PNF.
(7) NFV infrastructure (NFV infrastructure, NFVI): The NFVI is an infrastructure layer of an NFV function, and includes a hardware resource, a virtual resource, and a virtualisation layer. From the perspective of a VNF, the virtualisation layer and the hardware resource seem to constitute an entire entity that can provide a required virtualised resource.
(8) Container infrastructure service management (container infrastructure service management, CISM) (or referred to as CaaS management, where an open-source prototype is based on Kubernetes): is responsible for managing a container object invoked by a containerized VNF, including creating, updating, and deleting the container object, and schedules the container object to a corresponding node resource (computing, storage, and network resources) in a container cluster node resource pool managed by the CISM. In the ETSI standard, the container object corresponds to a managed container infrastructure object (managed container infrastructure object, MCIO).
(9) Container cluster management (CIS cluster management, CCM) is responsible for managing a container cluster, including creating a node resource pool to be used by the container cluster and scaling the node. A container cluster is a collection of a monitoring and management system (for example, Kubernetes Master) and a series of computing nodes. The container cluster is a dynamic system, a plurality of containers can be deployed in the system, and the system can monitor states of these containers and communication between containers.

In the system architecture shown in FIG. 1, function components may communicate with each other through a reference point shown in the figure. For example, in FIG. 1, an NFVO and a VIM communicate with each other through an Or-Vi reference point, and a VNFM and the VIM communicate with each other through a Vi-Vnfm reference point. A relationship between another reference point interface and each function component is shown in FIG. 1. For brevity, details are not described herein.

It should be understood that the system architecture shown above is merely an example for description, and a system architecture applicable to embodiments of this application is not limited thereto. Any system architecture that can implement functions of the function components is applicable to embodiments of this application.

It should be further understood that names of interfaces between the foregoing function components in FIG. 1 are merely examples, and the interfaces may have other names during specific implementation. This is not specifically limited in this application. In addition, names of messages (or signaling) transmitted between the foregoing function components are merely examples, and do not constitute any limitation on functions of the messages.

It may be understood that the term "and/or" in this specification describes only an association relationship for associated objects and indicates that three relationships may exist. For example, A and/or B may indicate the following three cases: Only A exists, both A and B exist, and only B exists. In addition, the character "/" in this specification generally indicates an "or" relationship between the associated objects.

In the NFV architecture based on FIG. 1, because there are a large quantity of reference points between the function components (that is, connection lines between the function components) in the architecture, an interface function defined at each reference point is complex, and different interface functions overlap, integration costs of an NFV MANO system are high, and scalability of a new functional block or reference point introduced to the system is poor. For example, if a new functional block is added in the NFV MANO architecture, new reference points may be defined between the functional block and a maximum of N existing functional blocks, and a quantity of interfaces increases exponentially. In addition, data models of managed objects and infrastructure resources used by the managed objects in the NFV MANO system are scattered in different functional blocks at different layers, and data of data models of a same managed object is inconsistent or redundant in different functional blocks. This is a great weakness for supporting management automation of all NFV MANO domains, and it is difficult to ensure that a management analysis or intent management module based on artificial intelligence or machine learning completes automatic closed-loop control based on accurate data input.

Currently, for example, the Nephio architecture with a flat architecture of the Linux Foundation also emerges in the industry, to implement automatic telco cloud management. However, for large-scale networking and requirements of telecommunications network operations and maintenance for high performance, high reliability, and high security, the NFV MANO architecture has deficiencies of complex architecture, poor scalability, and the like during long-term evolution and development of the telco cloud, and the Nephio architecture has disadvantages of insufficient telco cloud-specific attributes, excessive customizations, and the like.

Therefore, an embodiment of this application provides a communication method. A data model and a function set are integrated in an NFV MANO management domain, so that data and a function operation of the managed object in the NFV MANO management domain are separated, to implement a simplified, agile, and scalable intent-driven management architecture.

The following first describes an intent-driven management architecture provided in this application.

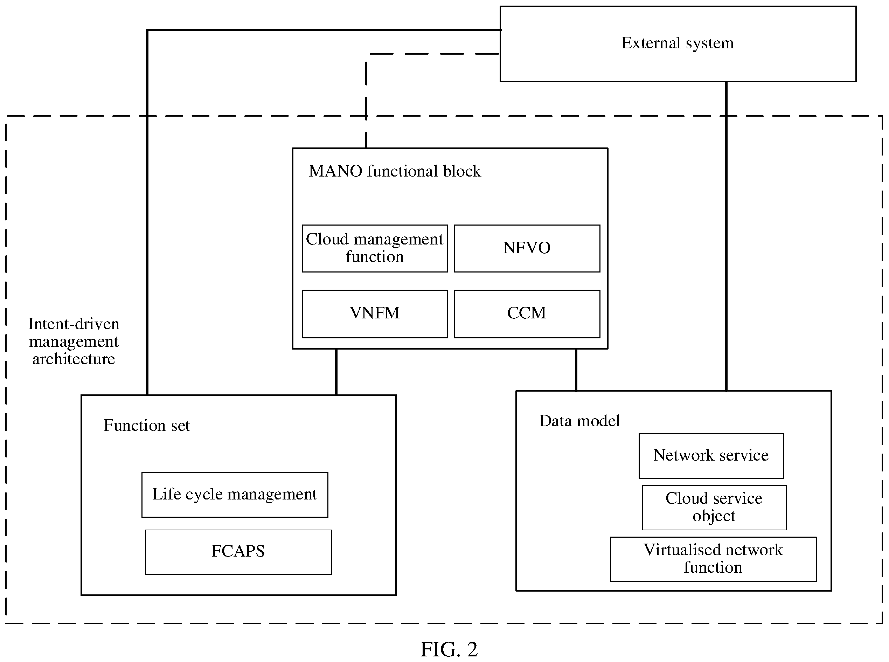

As shown in FIG. 2, the intent-driven management architecture (or referred to as an NFV MANO management domain) provided in this application includes a MANO functional block, a function set, and a data model. The MANO functional block may separately invoke a function in the function set and access information about a managed object in the data model. There is a logical interaction relationship between the MANO functional block and an external system (for example, an operations support system (operations support system, OSS)), and between the MANO functional blocks, and there is no physical interoperability interface (that is, a dashed line in FIG. 2) between the MANO functional blocks. Interaction between different functional blocks is implemented by each pair of functional blocks by acting on the same managed object in the data model and performing a "read" or "write" operation on the managed object.

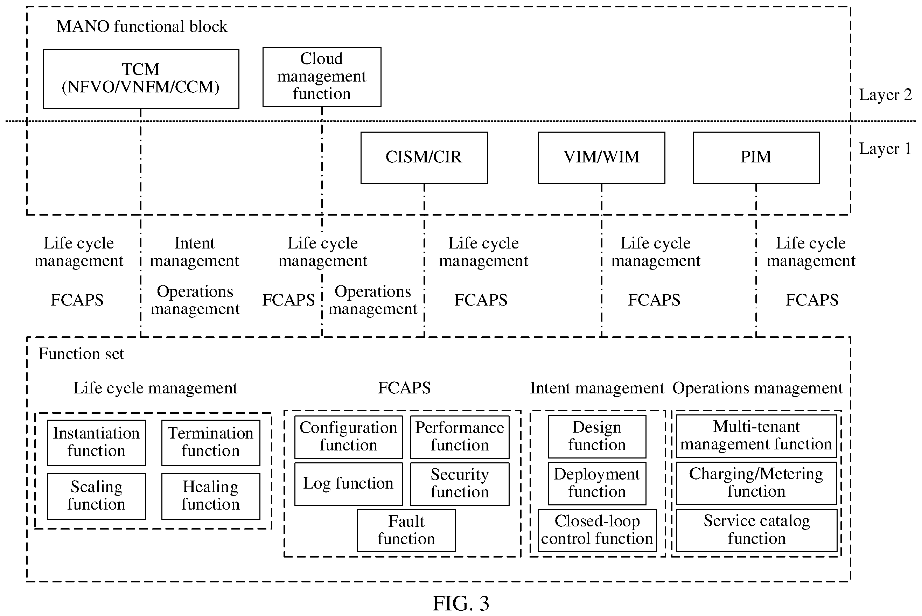

The MANO functional block is a large-granularity functional entity that performs interface interoperability between MANO functional blocks and between the MANO functional blocks and the external system in the NFV MANO management domain. The MANO functional blocks include but are not limited to an NFVO, a VNFM, container cluster management (container infrastructure service cluster management, CCM), a cloud management function, container infrastructure service management (container infrastructure service management, CISM)/container image repository (container image registry, CIR), a VIM/wide area network infrastructure manager (WAN infrastructure manager, WIM), and the like. For details of the MANO functional blocks, refer to FIG. 3. The cloud management function is used to manage a cloud service provided in the NFV MANO management domain, for example, a cloud service formed by allocating a virtual computing, virtual storage, or virtual network resource at an infrastructure layer. In the intent-driven management architecture provided in this application, the MANO functional block may also be further extended. For example, a physical infrastructure manager (physical infrastructure manager, PIM) is introduced, or some existing functional blocks may be aggregated to form a highly autonomous functional block. For example, telco cloud management (telco cloud management, TCM) aggregates an NFVO, a VNFM, and/or a CCM functional block in an original architecture. As shown in FIG. 3, an aggregation relationship between NFV MANO functional blocks is not specifically limited herein.

The function set is a group of general operation or notification definitions (or referred to as a Type A component) that are irrelevant to a specific managed object and that are formed through generalization and combination of management plane functions (or services) that provide a same function but perform operations on different managed objects in the NFV MANO architecture based on a design principle of a service-based architecture (service-based architecture, SBA), that is, a function set for performing an operation or notification on an abstract "general NFV object". For details, refer to FIG. 3.

Specifically, the function set may be further divided into general functions and other types of functions according to different functions of the function set.

As shown in FIG. 3, the general functions include life cycle management (life cycle management, LCM) oriented to a general NFV object and fault management, configuration management, account management, performance management, and security management (fault management, configuration management, account management, performance management, security management, FCAPS) oriented to the general NFV object for operations, administration, and maintenance.

The life cycle management is used to manage an entire life cycle of the general NFV object from instantiation to termination.

Specifically, the life cycle management includes at least one of the following management operation functions:
an instantiation function, a scaling function, a termination function, and a healing function.

The instantiation function is used to instantiate a general NFV object, and create an instance for the object.

The scaling function is used to perform auto-scaling on an instantiated general NFV object, and allocate or reclaim a corresponding infrastructure resource for the NFV object.

The termination function is used to terminate an instantiated general NFV object and release a virtual infrastructure resource used by the object instance.

The healing function is used to heal and recover a general NFV object that fails or is faulty.

The FCAPS is used for configuration management, performance management, account management, performance management, and security management in a conventional network management field.

Specifically, the FCAPS includes a configuration management function, a performance management function, a fault management function, an account management function, and a security management function.

The account management may further include log management and the like.

It should be noted that for specific descriptions of the foregoing FCAPS, refer to related descriptions in the existing network management field. Details are not described herein in this application.

In the intent-driven management architecture provided in this application, the foregoing function set may be further extended to add other types of functions, for example, intent management and operations management in FIG. 3.

The intent management is used to perform intent-based management on a general NFV object.

Specifically, the intent management includes at least one of the following management operation functions:
a design function, a deployment function, and a closed-loop control function.

The design function is used to define a corresponding intent for management of a general NFV object.

The deployment function is used to deploy an intent of a general NFV object on the NFV network to make the intent take effect.

The closed-loop control function is used to perform closed-loop control on a deployed intent of a general NFV object, for example, translation and verification of the intent, to ensure that execution of the intent complies with a defined intent objective managed by the general NFV object.

The operations management is used to plan, organize, implement, and control an operations process of the managed object in the NFV MANO management domain.

Specifically, the operations management includes at least one of the following management operation functions:
a multi-tenant management function, a charging or metering function, and a service catalog function.

The multi-tenant management function is used to manage tenants that use a managed object in an NFV MANO management domain of a service type, including creating and deleting a tenant.

The charging or metering function is used to measure and charge usage of the managed object in the NFV MANO management domain of the service type.

The service catalog function is used for catalog management of the managed object of the NFV MANO management domain.

It should be noted that the foregoing descriptions of function composition of the intent management and the operations management are merely examples. For details, refer to descriptions of intent management and operations management in the conventional technology. This is not limited in this application.

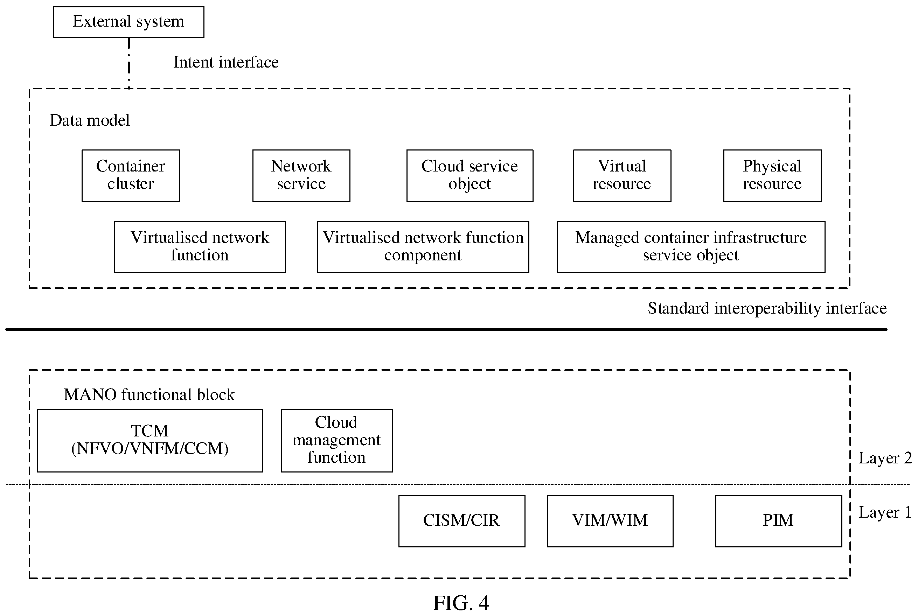

The data model (or referred to as a Type B component) is used to uniformly store, access, and manage managed objects in the intent-driven management architecture, and the data model is irrelevant to a function operation. The data model of the managed object stored in the data model includes image information of the object instance in a running state, and configuration, fault, and performance management information required by the object in operations, administration, and maintenance. The managed object includes but is not limited to a container cluster, a cloud service object, a network service (network service, NS), a virtualised network function (virtualised network function, VNF), a virtual network function component (virtual network function component, VNFC), a container cluster, a managed container infrastructure service object, a virtual resource, a physical resource, and the like. This is not limited in this application. A MANO functional block implements a data-driven declarative application programming interface (Application Programming Interface, API) interaction mode by accessing the managed object in the data model, as shown in FIG. 4.

It should be noted that the foregoing descriptions of the MANO functional block, the function set, and the data model are merely examples, and function ranges of the MANO functional block, the function set, and the data model are not limited in this application.

With reference to specific embodiments, the following describes in detail a communication method provided in embodiments of this application.

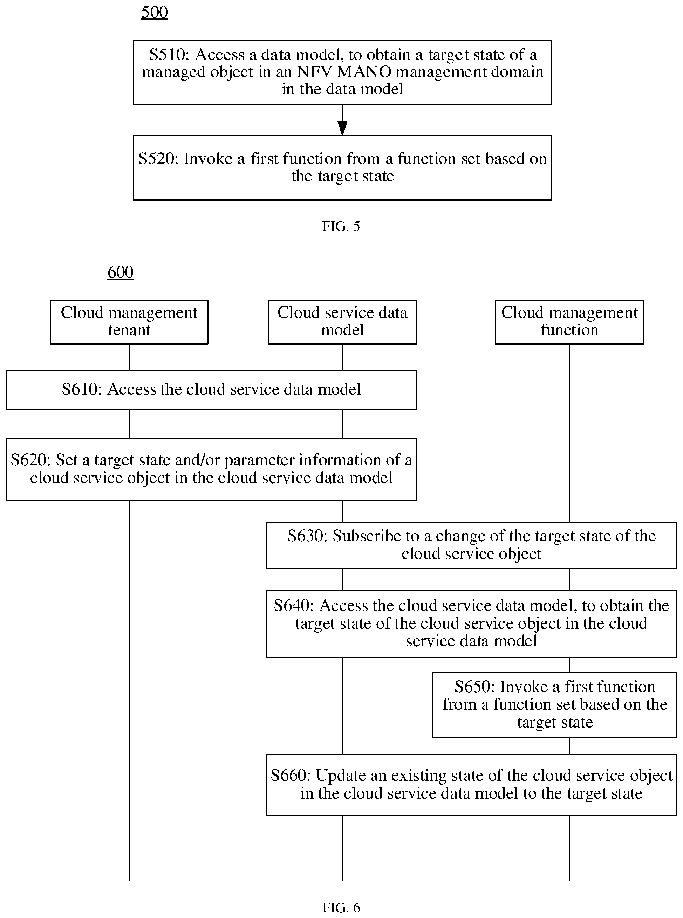

FIG. 5 is a schematic flowchart of a communication method 500 according to an embodiment of this application. As shown in FIG. 5, the method 500 specifically includes the following steps.

S510: Access a data model, to obtain a target state of a managed object in an NFV MANO management domain in the data model.

Specifically, the NFV MANO management domain accesses the data model used to store information about the managed object in the NFV MANO management domain, to obtain the target state of the managed object in the NFV MANO management domain in the data model.

The managed object in the NFV MANO management domain includes any one of the following:
a cloud service object, a network service (network service, NS), a virtualised network function (virtualised network function, VNF) a virtual network function component (virtual network function component, VNFC), a container cluster, a managed container infrastructure service object, a virtual resource, and a physical resource.

The cloud service object is an NFV MANO managed object that is subscribed to and used by a tenant as a service in a telco cloud, for example, a computing resource or a storage resource at an infrastructure layer.

The data model includes parameter information of the managed object, and the parameter information supports transition from an existing state of the managed object to the target state. For example, the parameter information of the managed object may be description information of an infrastructure as a service (infrastructure as a service, IaaS) resource. This is not limited in this application.

Optionally, the data model may further include configuration information, management information, and the like of the managed object. This is not limited in this application.

It should be noted that for descriptions of the foregoing data model, refer to related descriptions in FIG. 2 and FIG. 3. To avoid repetition, detailed descriptions thereof are omitted herein.

S520: Invoke a first function from a function set based on the target state.

Specifically, after learning the target state of the managed object, the NFV MANO management domain invokes the first function from the function set based on the target state.

It should be understood that, that the NFV MANO management domain invokes the first function from the function set based on the target state may be understood as: The NFV MANO management domain determines the first function from the function set based on the target state, and executes the first function, so that the managed object transits from the existing state to the target state.

The function set includes a plurality of general functions and other types of functions.

For example, the function set includes general functions such as life cycle management and FCAPS. The other types of functions in the function set include intent management, operations management, and the like. For details, refer to FIG. 3 and related descriptions of FIG. 3. This is not limited in this application.

The function set includes the first function, and the first function is used for transition from the existing state of the managed object to the target state.

Optionally, the first function is used for transition from the existing state of the managed object to the target state based on the parameter information.

It should be understood that, that the first function is used for transition from the existing state of the managed object to the target state based on the parameter information may be understood as: The first function is performed based on a configuration such as a specific parameter in the parameter information for transition from the existing state of the managed object to the target state.

In a possible implementation, the NFV MANO management domain invokes the first function from the function set based on the target state and the existing state of the managed object.

Specifically, after learning the target state of the managed object, the NFV MANO management domain invokes the first function from the function set based on the target state and the existing state of the managed object.

Based on the foregoing solution, the data model and the function set are integrated in the NFV MANO management domain, so that data and a function operation of the managed object in the NFV MANO management domain are separated, to implement a simplified, agile, and scalable intent-driven management architecture.

Further, before the NFV MANO management domain accesses the data model, the NFV MANO management domain monitors a state of the managed object, and the method 500 may further include:
S530: Subscribe to a change of the target state of the managed object.

Specifically, the NFV MANO management domain subscribes to the change of the target state of the managed object. When the NFV MANO management domain detects that a state of the managed object changes, or the NFV MANO management domain is notified that the state of the managed object changes, the NFV MANO management domain accesses the data model that stores the parameter information of the managed object.

It should be understood that subscribing to the change of the target state of the managed object may be understood as monitoring whether the target state of the managed object changes, or a subscription notification message that indicates that the state of the managed object changes can be received. A specific manner of subscribing to the change of the target state of the managed object is not limited in this application.

Further, after the NFV MANO management domain invokes the first function from the function set based on the target state, the NFV MANO management domain updates the state of the managed object. The method 500 may further include:
S540: Update the existing state of the managed object in the data model to the target state.

Specifically, after the NFV MANO management domain executes the first function, when the NFV MANO management domain detects that the state of the managed object has transited to the target state, the NFV MANO management domain updates the existing state of the managed object in the data model to the target state.

FIG. 6 is a schematic flowchart of a communication method 600 according to an embodiment of this application. For FIG. 6, refer to the description of FIG. 5. As shown in FIG. 6, the method 600 specifically includes the following steps.

S610: A cloud management tenant accesses a cloud service data model.

Specifically, an enterprise user accesses the cloud service data model in data models through a cloud management tenant portal interface (portal), to obtain an existing state of a cloud service object.

The cloud service data model is used to store parameter information of the cloud service object, and the parameter information of the cloud service object includes the existing state of the cloud service object.

For example, the existing state of the cloud service object is "the object is not instantiated".

Optionally, the cloud service data model may further include configuration information of the cloud service object, management information of the cloud service object, and the like. This is not limited in this application.

S620: The cloud management tenant sets the target state and/or the parameter information of the cloud service object in the cloud service data model.

Specifically, the enterprise user sets the target state and/or the parameter information of the cloud service object in the cloud service data model through the cloud management tenant.

For example, the enterprise user sets, in the cloud service data model through the cloud management tenant, the target state of the cloud service object to "object instantiated", and sets required parameter information of the cloud service object in the target state, for example, description information of an infrastructure as a service (infrastructure as a service, IaaS) resource.

S630: A cloud management function subscribes to a change of the target state of the cloud service object.

Specifically, the cloud management function in the NFV MANO management domain monitors state information of the cloud service object. When the cloud management tenant sets the target state and/or the parameter information of the cloud service object in the cloud service data model, the cloud management function can detect that a state of the cloud service object changes (for example, the target state is set for the cloud service object).

It should be understood that subscribing to the change of the target state of the cloud service object may be understood as monitoring whether the target state of the cloud service object changes, or a subscription notification message that indicates that the state of the cloud service object changes can be received. A specific manner of subscribing to the change of the target state of the cloud service object is not limited in this application.

S640: The cloud management function accesses the cloud service data model, to obtain the target state of the cloud service object in the cloud service data model.

Specifically, when the cloud management function detects that the state of the cloud service object changes (for example, the target state is set for the cloud service object), the cloud management function accesses the cloud service data model that stores the parameter information of the cloud service object, to obtain the target state of the cloud service object in the cloud service data model.

Optionally, the cloud service data model further includes the parameter information, and the parameter information supports transition from the existing state of the cloud service object to the target state.

For example, the parameter information is description information of an IaaS resource, for example, virtual computing, virtual storage, or virtual network resources. This is not limited in this application.

In a possible implementation, the cloud management function accesses the cloud service data model, to obtain the target state and the parameter information of the cloud service object in the cloud service data model.

S650: The cloud management function invokes a first function from a function set based on the target state.

Specifically, after obtaining the target state of the cloud service object, the cloud management function invokes, based on the target state, the first function that is in the function set and that is used for transition from the existing state of the cloud service object to the target state.

In a possible implementation, the cloud management function invokes the first function from the function set based on the target state and the existing state of the cloud service object.

The first function is used for transition from the existing state of the cloud service object to the target state.

Optionally, the first function is used for transition from the existing state of the cloud service object to the target state based on the parameter information.

For example, when the target state of the cloud service object obtained by the cloud management function is "object instantiated", the cloud management function invokes, based on the target state, a function of "instantiating the cloud service object" (that is, the first function) in the function set, and uses the description information of the IaaS resource obtained in S640 as a group of parameters used by the function of "instantiating a cloud service object", to implement IaaS resource allocation required by the cloud service object to achieve the target state.

S660: The cloud management function updates the existing state of the cloud service object in the cloud service data model to the target state.

Specifically, after the cloud management function executes the first function, when the cloud management function detects that the state of the cloud service object is transited to the target state, the cloud management function updates the existing state of the cloud service object in the cloud service data model to the target state.

For example, the cloud management function updates the existing state of the cloud service object in the cloud service data model to "object instantiated".

Based on the foregoing solution, the cloud service data model and the function set are integrated in the NFV MANO management domain, so that data and a function operation of the cloud service object are separated, to implement a simplified, agile, and scalable intent-driven management architecture.

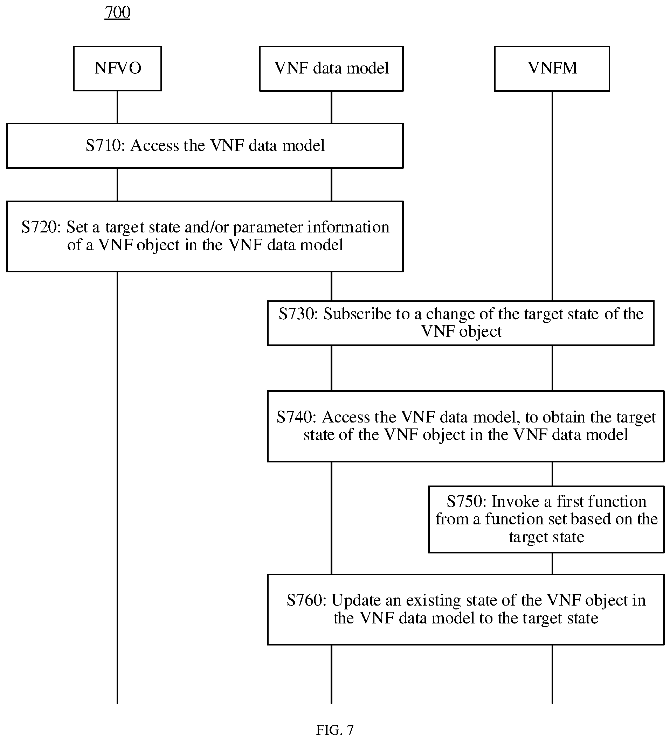

FIG. 7 is a schematic flowchart of a communication method 700 according to an embodiment of this application. For FIG. 7, refer to the description of FIG. 5. As shown in FIG. 7, the method 700 specifically includes the following steps.

S710: An NFVO accesses a VNF data model.

Specifically, the NFVO accesses the VNF data model in data models, to obtain an existing state of a VNF object.

The VNF data model is used to store parameter information of the VNF object, and the parameter information of the VNF object includes the existing state of the VNF object.

For example, the existing state of the VNF object is "the object is not instantiated".

Optionally, the VNF data model may further include configuration information of the VNF object, management information of the VNF object, and the like. This is not limited in this application.

It should be noted that the NFVO in S710 may alternatively be telco cloud management (telco cloud management, TCM) in which an NFVO functional block is integrated. This is not limited in this application.

S720: The NFVO sets a target state and/or the parameter information of the VNF object in the VNF data model.

For example, the NFVO sets the target state of the VNF object to "object instantiated" in the VNF data model, and sets required parameter information of the VNF object in the target state.

S730: A VNFM subscribes to a change of the target state of the VNF object.

Specifically, the VNFM monitors state information of the VNF object. When the NFVO sets the target state and/or the parameter information of the VNF object in the VNF data model, the VNFM can detect that a state of the VNF object changes (for example, the target state is set for the VNF object).

It should be understood that subscribing to the change of the target state of the VNF object may be understood as monitoring whether the target state of the VNF object changes, or a subscription notification message that indicates that the state of the VNF object changes can be received. A specific manner of subscribing to the change of the target state of the VNF object is not limited in this application.

S740: The VNFM accesses the VNF data model, to obtain the target state of the VNF object in the VNF data model.

Specifically, when the VNFM detects that the state of the VNF object changes (for example, the target state is set for the VNF object), the cloud management function accesses the VNF data model that stores the parameter information of the VNF object, to obtain the target state of the VNF object in the VNF data model.

Optionally, the VNF data model further includes the parameter information, and the parameter information supports transition from the existing state of the VNF object to the target state.

In a possible implementation, the VNFM accesses the VNF data model, to obtain the target state and the parameter information of the VNF object in the VNF data model.

S750: The VNFM invokes a first function from a function set based on the target state.

Specifically, after obtaining the existing state and the target state of the VNF object, the VNFM compares a difference between the existing state and the target state, and invokes the first function used for transition from the existing state of the VNF object to the target state, so that the VNF object achieves the target state.

In a possible implementation, the VNFM sets a target state of a virtual machine object in a data model of the virtual machine object, and a VIM obtains the target state of the virtual machine object from the data model of the virtual machine object, and invokes a second function to enable the virtual machine object to achieve the target state.

Specifically, after the VNFM obtains the existing state and the target state of the VNF object, the VNFM further sets the target state of the virtual machine object in a component of the VNF, that is, the data model of the virtual machine object. When detecting that a state of the virtual machine object changes, the VIM accesses the data model of the virtual machine object, to obtain the target state of the virtual machine object, further compares a difference between an existing state of the virtual machine object and the target state, and invokes a second function used for transition from the existing state of the virtual machine object to the target state, so that the virtual machine object achieves the target state, and the VNF object achieves the target state.

S760: The VNFM updates the existing state of the VNF object in the VNF data model to the target state.

Specifically, after the VNFM executes the first function, when the VNFM detects that the state of the VNF object is transited to the target state, the VNFM updates the existing state of the VNF object in the VNF data model to the target state.

For example, the VNFM updates the existing state of the VNF object in the VNF data model to "object instantiated".

Based on the foregoing solution, the data model and the function set of the managed object are integrated in the NFV MANO management domain, so that data and a function operation of the managed object are separated, to implement a simplified, agile, and scalable intent-driven management architecture.

It may be understood that the examples in FIG. 5 to FIG. 7 in embodiments of this application are merely intended to help a person skilled in the art understand embodiments of this application, but are not intended to limit embodiments of this application to specific scenarios in the examples. A person skilled in the art can apparently make various equivalent modifications or changes according to the examples in FIG. 5 to FIG. 7, and such modifications or changes also fall within the scope of embodiments of this application.

It may be further understood that some optional features in embodiments of this application may be independent of other features in some scenarios, or may be combined with other features in some scenarios. This is not limited.

It may be further understood that the solutions in embodiments of this application may be appropriately combined for use, and explanations or descriptions of terms in the embodiments may be mutually referenced or explained in the embodiments. This is not limited.

It may be further understood that various numeric sequence numbers in embodiments of this application do not mean execution sequences, but are merely for differentiation for ease of description, and therefore should not constitute any limitation on an implementation process of embodiments of this application.

It may be further understood that some names in embodiments of this application, for example, the first function or the second function, do not limit the protection scope of embodiments of this application.

It may be further understood that in the foregoing method embodiments, a method and an operation implemented by an NFV MANO management domain may also be implemented by a function component (or referred to as a management functional entity) in the NFV MANO management domain. In addition, a method and an operation implemented by a cloud management function may also be implemented by a function component (or referred to as a management functional entity) in the cloud management function. This is not limited. Corresponding to the methods provided in the foregoing method embodiments, embodiments of this application further provide corresponding apparatuses. The apparatuses include corresponding modules configured to perform the foregoing method embodiments. The module may be software, or a combination of software and hardware. It may be understood that the technical features described in the method embodiments are also applicable to the following apparatus embodiments.

It should be understood that, the NFV MANO management domain or the cloud management function may perform some or all steps in the foregoing embodiments. These steps or operations are merely examples. In embodiments of this application, another operation or variants of various operations may be further performed. In addition, the steps may be performed in a sequence different from that presented in the foregoing embodiments, and not all the operations in the foregoing embodiments may need to be performed.

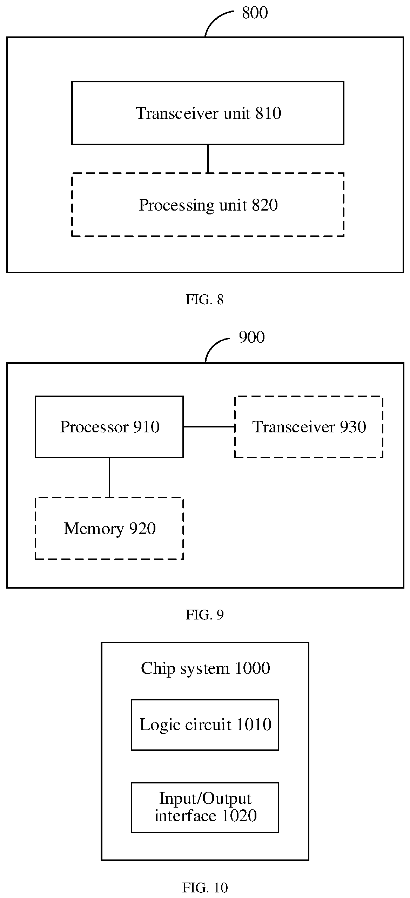

The foregoing describes in detail the communication methods provided in embodiments of this application with reference to FIG. 5 to FIG. 7. The following describes in detail the communication apparatuses provided in embodiments of this application with reference to FIG. 8 to FIG. 10. It should be understood that descriptions of apparatus embodiments correspond to the descriptions of the method embodiments. Therefore, for content that is not described in detail, refer to the method embodiments above. For brevity, details of a part of content are not described herein again.

FIG. 8 is a block diagram of a communication apparatus according to an embodiment of this application. The apparatus 800 includes a transceiver unit 810, and the transceiver unit 810 may be configured to implement a corresponding communication function. The transceiver unit 810 may also be referred to as a communication interface or a communication unit.

Optionally, the apparatus 800 may further include a processing unit 820, and the processing unit 820 may be configured to perform data processing.

Optionally, the apparatus 800 further includes a storage unit. The storage unit may be configured to store instructions and/or data. The processing unit 820 may read the instructions and/or the data in the storage unit, so that the apparatus implements actions of different apparatuses in the foregoing method embodiments, for example, an action of an NFV MANO management domain or a cloud management function.

The apparatus 800 may be configured to perform an action performed by the NFV MANO management domain or the cloud management function in the foregoing method embodiments. In this case, the apparatus 800 may be the NFV MANO management domain or the cloud management function, or a component of the NFV MANO management domain or the cloud management function. The processing unit 820 is configured to perform an operation related to processing of the NFV MANO management domain or the cloud management function in the foregoing method embodiments.

It should be further understood that the apparatus 800 herein is embodied in a form of functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 800 may be specifically the NFV MANO management domain or the cloud management function in the foregoing embodiments, and may be configured to perform procedures and/or steps corresponding to the NFV MANO management domain or the cloud management function in the foregoing method embodiments. To avoid repetition, details are not described herein again.

The apparatus 800 in each of the foregoing solutions has a function of implementing corresponding steps performed by the NFV MANO management domain or the cloud management function in the foregoing methods, or the apparatus 800 in each of the foregoing solutions has a function of implementing corresponding steps performed by the NFV MANO management domain or the cloud management function in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver machine), and another unit, for example, the processing unit, may be replaced by a processor, to separately perform receiving-sending operations and a related processing operation in the method embodiments.

In addition, the transceiver unit 810 may alternatively be a transceiver circuit (for example, may include a receiving circuit and a sending circuit), and the processing unit may be a processing circuit.

It should be noted that the apparatus in FIG. 8 may be the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

As shown in FIG. 9, an embodiment of this application provides another communication apparatus 900. The apparatus 900 includes a processor 910. The processor 910 is coupled to a memory 920, the memory 920 is configured to store a computer program or instructions and/or data, and the processor 910 is configured to: execute the computer program or the instructions stored in the memory 920, or read the data stored in the memory 920, to perform the method in the foregoing method embodiments.

Optionally, there are one or more processors 910.

Optionally, there are one or more memories 920.

Optionally, the memory 920 and the processor 910 are integrated or disposed separately.

Optionally, as shown in FIG. 9, the apparatus 900 further includes a transceiver 930. The transceiver 930 is configured to receive and/or send a signal. For example, the processor 910 is configured to control the transceiver 930 to receive and/or send a signal.

In a solution, the apparatus 900 is configured to implement operations performed by an NFV MANO management domain or a cloud management function in the foregoing method embodiments.

For example, the processor 910 is configured to execute the computer program or the instructions stored in the memory 920, to implement a related operation of the NFV MANO management domain or the cloud management function in the foregoing method embodiments, for example, the NFV MANO management domain in the embodiment shown in FIG. 5, or a method of the NFV MANO management domain or the cloud management function in the embodiment shown in FIG. 5.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logical device, a discrete gate or a transistor logical device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logical device, a discrete gate or a transistor logical device, or a discrete hardware component, the memory (a storage module) may be integrated into the processor.

It should further be noted that the memory described herein is intended to include, but is not limited to, these and any other appropriate type of memory.

As shown in FIG. 10, an embodiment of this application provides a chip system 1000. The chip system 1000 (or may be referred to as a processing system) includes a logic circuit 1010 and an input/output interface (input/output interface) 1020.

The logic circuit 1010 may be a processing circuit in the chip system 1000. The logic circuit 1010 may be coupled to and connected to a storage unit, and invoke instructions in the storage unit, to enable the chip system 1000 to implement the methods and functions in embodiments of this application. The input/output interface 1020 may be an input/output circuit in the chip system 1000, and outputs information processed by the chip system 1000, or inputs to-be-processed data or signaling information into the chip system 1000 for processing.

In a solution, the chip system 1000 is configured to implement operations performed by an NFV MANO management domain or a cloud management function in the foregoing method embodiments.

For example, the logic circuit 1010 is configured to implement a processing related operation of the NFV MANO management domain or the cloud management function in the foregoing method embodiments, for example, a processing related operation of the NFV MANO management domain in the embodiment shown in FIG. 5. The input/output interface 1020 is configured to implement a sending and/or receiving related operation of the NFV MANO management domain in the foregoing method embodiments, for example, a sending and/or receiving related operation performed by the NFV MANO management domain in the embodiment shown in FIG. 5.

An embodiment of this application further provides a computer-readable storage medium. The computer-readable storage medium stores a computer instruction used to implement the method performed by an NFV MANO management domain or a cloud management function in the foregoing method embodiments.

For example, when the computer program is executed by a computer, the computer is enabled to implement the method performed by the NFV MANO management domain or the cloud management function in the foregoing method embodiments.

An embodiment of this application further provides a computer program product, including instructions. When the instructions are executed by a computer, the method performed by an NFV MANO management domain or a cloud management function in the foregoing method embodiments is implemented.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein a network functions virtualisation management and orchestration NFV MANO management domain comprises a data model and a function set, and the method comprises:
accessing the data model, to obtain a target state of a managed object in the NFV MANO management domain in the data model; and
invoking a first function from the function set based on the target state, wherein the first function is used for transition from an existing state of the managed object to the target state.

2. The method according to claim 1, wherein the data model further comprises parameter information, and the parameter information supports transition from the existing state of the managed object to the target state.

3. The method according to claim 2, wherein that the first function is used for transition from the existing state of the managed object to the target state comprises:
the first function is used for transition from the existing state of the managed object to the target state based on the parameter information.

4. The method according to any one of claims 1 to 3, wherein before the accessing the data model, the method further comprises:
subscribing to a change of the target state of the managed object.

5. The method according to any one of claims 1 to 4, wherein the invoking the first function from the function set based on the target state comprises:
invoking the first function from the function set based on the target state and the existing state of the managed object.

6. The method according to any one of claims 1 to 5, wherein after the invoking the first function from the function set based on the target state, the method further comprises:
updating the existing state of the managed object in the data model to the target state.

7. The method according to any one of claims 1 to 6, wherein the managed object comprises any one of the following:
a cloud service object, a network service NS, a virtualised network function VNF, a virtualised network function component VNFC, a container cluster, a managed container infrastructure service object, a virtual resource, and a physical resource.

8. The method according to any one of claims 1 to 7, wherein the function set comprises at least one of the following:
life cycle management; fault management, configuration management, account management, performance management, and security management FCAPS; intent management; and operations management.

9. The method according to claim 8, wherein the life cycle management comprises at least one of the following management operation functions:
an instantiation function, a scaling function, a termination function, and a healing function.

10. The method according to claim 8, wherein the FCAPS comprises at least one of the following management operation functions:
a configuration management function, a performance management function, a fault management function, an account management function, and a security management function.

11. The method according to claim 8, wherein the intent management comprises at least one of the following management operation functions:
a design function, a deployment function, and a closed-loop control function.

12. The method according to claim 8, wherein the operations management comprises at least one of the following management operation functions:
a multi-tenant management function, a charging or metering function, and a service catalog function.

13. A communication apparatus, wherein a network functions virtualisation management and orchestration NFV MANO management domain comprises a data model and a function set, and the apparatus comprises:
a processing unit, configured to access the data model, to obtain a target state of a managed object in the NFV MANO management domain in the data model, wherein
the processing unit is further configured to invoke a first function from the function set based on the target state, wherein the first function is used for transition from an existing state of the managed object to the target state.

14. The apparatus according to claim 13, wherein the data model further comprises parameter information, and the parameter information supports transition from the existing state of the managed object to the target state.

15. The apparatus according to claim 14, wherein that the first function is used for transition from the existing state of the managed object to the target state comprises:
the first function is used for transition from the existing state of the managed object to the target state based on the parameter information.

16. The apparatus according to any one of claims 13 to 15, wherein before the accessing the data model, the apparatus further comprises:
the processing unit, further configured to subscribe to a change of the target state of the managed object.

17. The apparatus according to any one of claims 13 to 16, wherein the invoking the first function from the function set based on the target state comprises:
the processing unit is further configured to invoke the first function from the function set based on the target state and the existing state of the managed object.

18. The apparatus according to any one of claims 13 to 17, wherein after the invoking the first function from the function set based on the target state, the apparatus further comprises:
the processing unit, further configured to update the existing state of the managed object in the data model to the target state.

19. The apparatus according to any one of claims 13 to 18, wherein the managed object comprises any one of the following:
a cloud service object, a network service NS, a virtualised network function VNF, a virtualised network function component VNFC, a container cluster, a managed container infrastructure service object, a virtual resource, and a physical resource.

20. The apparatus according to any one of claims 13 to 19, wherein the function set comprises at least one of the following:
life cycle management, FCAPS, intent management, and operations management.

21. The apparatus according to claim 20, wherein the life cycle management comprises at least one of the following management operation functions:
an instantiation function, a scaling function, a termination function, and a healing function.

22. The apparatus according to claim 20, wherein the FCAPS comprises at least one of the following management operation functions:
a configuration management function, a performance management function, a fault management function, an account management function, and a security management function.

23. The apparatus according to claim 20, wherein the intent management comprises at least one of the following management operation functions:
a design function, a deployment function, and a closed-loop control function.

24. The apparatus according to claim 20, wherein the operations management comprises at least one of the following management operation functions:
a multi-tenant management function, a charging or metering function, and a service catalog function.

25. A computer-readable storage medium, wherein the computer-readable storage medium stores a computer program or instructions, and when the computer program or the instructions are executed by a processor, the method according to any one of claims 1 to 12 is performed.

26. A computer program product comprising instructions, wherein when the computer program product runs on a computer, the method according to any one of claims 1 to 12 is performed.

27. A chip system, comprising a processor, configured to invoke a computer program or instructions from a memory and run the computer program or the instructions, so that a communication apparatus in which the chip system is installed implements the method according to any one of claims 1 to 12.
